# EUROPEAN PATENT SPECIFICATION

(11) **EP 2 250 747 B1**
(45) Date of publication and mention of the grant of the patent: **06.06.2018**
(21) Application number: 09708911.4
(22) Date of filing: 04.02.2009
(51) Int. Cl.: H04B 17/00

(54) **METHOD AND ARRANGEMENT IN A TELECOMMUNICATIONS SYSTEM**
VERFAHREN UND ANORDNUNG IN EINEM TELEKOMMUNIKATIONSSYSTEM
PROCÉDÉ ET AGENCEMENT DANS UN SYSTÈME DE TÉLÉCOMMUNICATIONS

(30) Priority: 05.02.2008 US 26230 P
(43) Date of publication of application: 17.11.2010
(73) Proprietor: Telefonaktiebolaget LM Ericsson (publ), 164 83 Stockholm (SE)
(72) Inventor: HAMMARWALL, David, S-112 61 Stockholm (SE); JÖNGREN, George, SE-112 41 Stockholm (SE); ASTELY, David, SE-168 56 Bromma (SE); LUNDEVALL, Per, Magnus, SE-191 63 Stockholm (SE)
(74) Representative: Ericsson
(86) International application number: PCT/IB2009/000205
(87) International publication number: WO 2009/098578

(56) References cited:
- WO-A1-2007/073040
- US-A- 5 606 729
- US-A1- 2005 013 283
- US-A1- 2005 032 540
- US-A1- 2007 270 100

## Description

### TECHNICAL FIELD

The present invention relates to a method and arrangement in a telecommunications system. (As used herein, references to the "present invention" or "invention" relate to exemplary embodiments and not necessarily to every embodiment encompassed by the appended claims.) More specifically, the present invention relates to facilitating Inter-cell interference, measurement.

### BACKGROUND

This section is intended to introduce the reader to various aspects of the art that may be related to various aspects of the present invention. The following discussion is intended to provide information to facilitate a better understanding of the present invention. Accordingly, it should be understood that statements in the following discussion are to be read in this light, and not as admissions of prior art.

The invention is described with some references to LTE, but it should be noted that it conceivably can be applied to other systems as well, including e.g. WCDMA. It should also be noted that the invention is equally applicable both in the downlink as well as the uplink of a wireless system.,

Signal and channel quality estimation is a fundamental part of a modern wireless system. The noise and interference- is used not only in the demodulator, but is also an important quantity when estimating, for example, the channel quality indicator (CQI). The following is noted with LTE in mind, but the principles are valid for most wireless systems.

The interference can be estimated from the common reference symbols (RS) that.are present in the time-frequency grid of an OFDM based system (e.g., LTE). An element in the time-frequency grid is referred to as a resource element (RE). The received signal in a RE can be written as **r=Hs+n**, where **H** is the channel response and **s** represents the transmitted symbols. The term; **n**, is the (unknown) noise and interference. The noise and interference show different characteristics in resource elements (RE) that hold RS, data, and control signaling; we therefore denote the received noise/interference for the different signaling types by I_RS, I_d, and I_control, respectively.

It is noted that the interference term in a RE containing RS, I_RS, at a specific user equipment (UE) can be estimated by the UE since s are known symbols and H is given by the channel estimator. It is further noted that the interference on REs with data (that is scheduled for the UE in question), I_d, also can be measured as soon as the (data) symbols, s, are detected (at this moment they can be regarded as known symbols). Similarly, to estimate I_control, the control symbols must first be detected.

US-A1-2007270100 discloses a method and apparatus for estimating reverse link loading in a wireless communication system. The reverse link interference is measured and reverse link receiver noise is measured. The reverse link interference is compared to the reverse link receiver noise, for example, by dividing the interference power by the receiver noise power. The reverse link receiver noise can be measured in an orthogonal frequency division multiple access (OFDMA) system by nulling transmission from access terminals within the cell and nearby during a null time and frequency interval. Power measure in the null time and frequency interval is receiver noise power. The reverse link interference can be measure by several means, for example, local null time and frequency intervals can be designated. The access terminal within the cell null their transmissions during the local time and frequency intervals. Access terminals outside the cell continue to transmit during the local time and frequency intervals. Power measured in the local time and frequency interval is interference power. As another example, interference power can be measured by subtracting pairs of pilot symbols that are contiguous to each other in time or frequency.

US-A1-2005013283 discloses that noise is measured at one or more base stations in a mobile communication system during periodic silence periods. A periodic silence period is defined for at least one carrier that is independent of reverse link channel frame boundaries. The radio base stations transmits silence parameters defining the periodic silence period to mobile stations, which stop transmitting during the periodic silence periods. A time reference is provided to the mobile stations to synchronize the silence periods for all mobile stations.

### SUMMARY

The statistical characteristics of the (inter-cell) interference may be significantly different, depending on whether the interference originates from
1. reference symbols from neighbouring cells
2. data signalling from neighbouring cells
3. control signalling from neighbouring cells

Each of these three categories can have different transmission power and spatial characteristics.

For accurate data channel CQI computation the UE must have good statistics of the interference that hits the data channel (which is a mixture of the three categories mentioned above), I_d. Ultimately, this interference statistics should be measured on the data channel itself; however, this measurement is limited to resource entities (i.e., time-frequency slots) that contain data scheduled to the particular user. The limited number of interference samples can significantly penalize the accuracy of the statistics estimate. Moreover, in multiuser-MIMO (i.e., spatial division multiple access) systems, several users may be assigned the same data REs, which in effect prohibits the UE to separate the inter-cell interference from the intra-cell interference, if the measurement is performed on data REs.

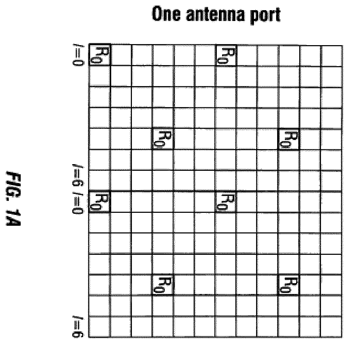

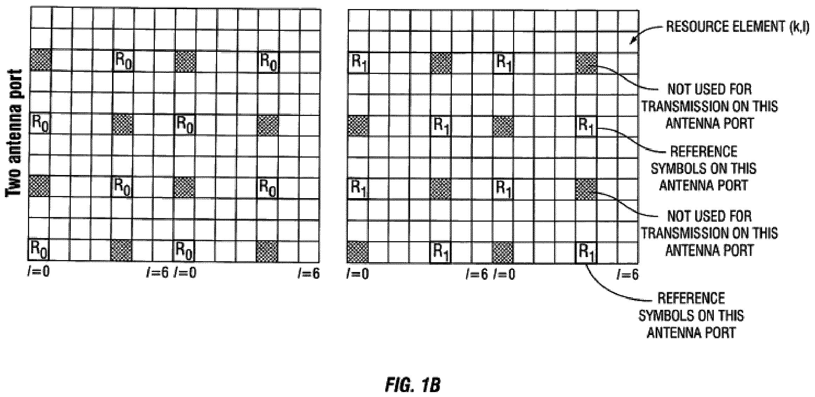

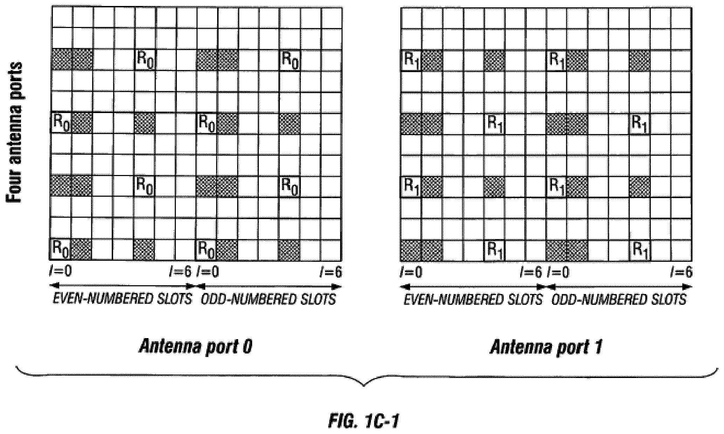

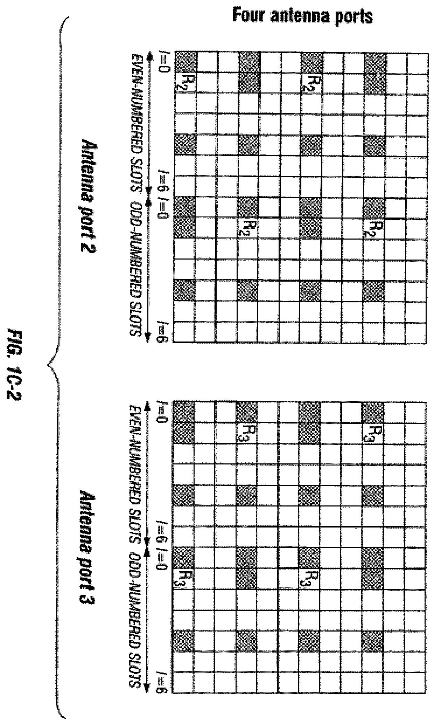

Alternatively, the interference measurement can be performed on REs containing a RS. However, the statistics of the interference that hits the RS, may have significantly different statistics than the interference on the data channel (or the control channel). There is a limited set of RS, and in particular for MIMO, where the position holding a RS on one antenna is empty for a neighboring antenna, therefore the interference hitting a RS will to a larger extent come from RSs of the neighboring cells. In particular in lightly loaded systems, I_RS, may be significantly different (typically substantially larger) than l_d, because possibly data is not allocated to all resource blocks (RB) in the neighboring cells. The statistics of the measured interference term may therefore deviate significantly from the interference that hits the data channel. The RS grid for a RB in case of 1, 2 and 4 Tx antennas is illustrated in figure 1. Between cells, the RS is shifted in frequency domain.

For 2 Tx antennas only three frequency shifts for common RS exists. This will lead to that not all data interference can be measured. Furthermore, the first three OFDM symbols might see control channel interference instead of data interference. Since control signaling may be differently power controlled than the data, the interference estimate obtained on these RS may not reflect the interference present when data is transmitted. If common RS in the later part of sub-frame is removed (for example because dedicated RS are inserted instead) it might be necessary to measure interference on data REs.

Further characteristics of the invention and advantages thereof will be evident from the following detailed description of embodiments of the invention.

The invention is defined by the appended claims. In the following, embodiments not falling within the scope of the claims should be understood as examples useful to understand the invention.

### BRIEF DESCRIPTION OF THE DRAWINGS

The present invention will become more fully understood from the detailed description of embodiments of the present invention given herein below and the accompanying figures, which are given by way of illustration only, and thus are not limitative of the present invention.
Figure 1 is an RS grid for a RB in case of 1, 2 and 4 Tx antennas; (Fig. 1 is composed of figs. 1A, 1B, 1C-1, 1C-2))
Figure 2 is a block diagram of a receiver unit of the present invention.
Figure 3 is a block diagram of a transmitting unit of the present invention.

### DETAILED DESCRIPTION

The following discloses a cell specific time- varying grid of data REs (referred to as the silent RE grid in the following) is introduced, for which no data is allocated; that is, the transmitter will be silent, on this grid. The grid is known to both the receiving and the transmitting unit.

The following also discloses that the receiving unit are able to measure the statistics of the signal that, is received on the silent RE grid; this signal, originates completely from inter- cell signals that interfere with the data channel.

The measured inter-cell interference can, for example, be used as a basis for channel quality (CQI) reporting and/or for interference suppression purposes in the receiving unit.

One advantage is that a statistics measurement, performed on the silent RE grid, is computationally trivial, because no data must be decoded to obtain the residual noise and interference.

There is also disclosed that the silent RE grid, could be randomized in consecutive (in frequency and time) resource blocks, to minimize the effects of potentially overlapping grids of neighbouring cells.

There is also disclosed that the layout of the cell specific silent RE grid can be derived with little; or no, signalling overhead; it could for example be derived from the cell ID and other information that is known to both the receiving and the transmitting unit.

There is also disclosed that a similar approach can be used to estimate the interference that hit the control channel, I_control, by introducing another silent RE grid on the control channel (e.g., potentially up to the first three ODFM symbols in an LTE subframe).

There is also disclosed that in a method in a receiving unit of a wireless network, for facilitating noise and interference measurements on an air interface is provided. The method comprises the steps of obtaining information relating to a layout of a silent RE grid, and taking the presence of a silent RE grid into account in the reception of a control or a data channel.

There is also disclosed that the step of obtaining information comprises using a pseudo-random sequence to generate said layout of said silent RE grid, and synchronising said pseudo-random sequency in each frame by deriving a seed for said pseudo-random sequency from a Cell ID and a Frame Index.

There is also disclosed that the step of obtaining information comprises receiving said layout of said silent RE grid through signalling.

There is also disclosed that the method includes the step of collecting statistics relating to the inter-cell interference based on measurements on said silent RE grid, and using said statistics to estimate any or all of: a channel quality indicator, the inter-cell interference power that hits the channel, the co-variance matrix of the inter-cell interference that hits the channel, the full probability distribution of the inter-cell interference.

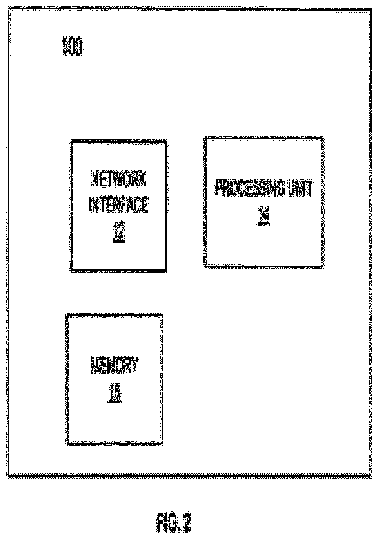

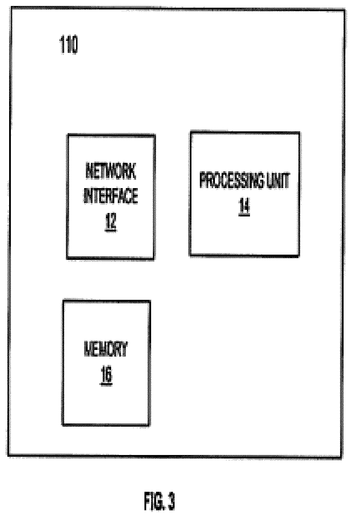

Referring now to the drawings wherein like reference numerals refer to similar or identical parts throughout the several views, and more specifically to figure 2 thereof, there is shown a receiving unit 100, or a transmitting unit 110, as shown in figure 3, of a wireless network, for facilitating noise and interference measurements on an air interface. The receiving unit 100 comprises a network interface 12 which obtains information relating to a time-varying layout of a silent resource element (RE) grid. The receiving unit 100 comprises an electronic memory 16 having code in communication with the network interface 12 which stores the information. The receiving unit 100 comprises a processing unit 14 in communication with the electronicmemory 16 that takes a presence of a silent RE grid into account in the reception of a control or a data channel. In the transmitting unit110, the processing unit 14 takes the presence of a silent RE grid into account in the transmission of a control or a data channel

The processing unit 14 can use a pseudo-random sequence to generate the layout .of the silent RE grid, and synchronizing the pseudo - random sequence by -deriving a seed for the pseudo random sequence from parameters The pseudo random sequence can be synchronized in each. frame by the processing unit 14 based on the parameters that includes a cell ID and a frame index. The layout of the silent RE grid can be received through signaling by the network interface 12.

The electronic memory 16 can collect statistics relating to inter-cell interference based on measurements on the silent RE grid. The processing unit 14 can use the statistics with the code to estimate any or all of: a channel quality indicator, inter-cell power that hits a channel, a co-variance matrix of the inter - cell interference that hits the channel, a full probability distribution of the Inter-cell interference; and send the signal through the network interface 12. The processing unit 14 can randomize the silent RE grid in consecutive, in frequency and time, resource blocks (RBs). The processing unit 14 can derive the silent RE grid with essentially no signaling overhead.

The processing unit 14 can of introduce another silent RE grid on a control channel to estimate the interference that hits the control channel using the code in the electronic memory 16. The processing unit 14 can coordinate each silent grid of neighboring cells in the wireless-system such that there is no significant overlap. For each subframe, the processing unit 14 can group resource blocks into resource windows where each resource window is a group of contiguous, in frequency, resource blocks; and the number of resource blocks in each resource window may be configured semi-statically. Each resource window has a same number of silent REs, and are configured semi-statically.

The present invention pertains to a method in a receiving unit 100 or a transmitting unit 110 of a wireless network,for facilitating noise and interference measurements on an air interface. The method comprises the steps of obtaining information relating to a time-varying layout of a silent resource element (RE) grid. There is the step of taking a presence of a silent RE grid into account in the reception of a control or a data.channel.

The step of obtaining information can include the steps of using a pseudo-random sequence to generate said layout of said silent RE grid, and synchronizing the pseudo - random sequence by deriving a seed for the pseudo - random sequence from parameters known to both: a receiving unit 100 and a transmitting unit 110. The pseudo - random sequence can be synchronized in each frame based on the parameters that includes a cell ID. and a frame index. The layout of the silent RE grid can be received through signaling.

There can be the steps of collecting statistics relating to inter-cell interference based on measurements on the silent RE grid in an electronic memory 16 having code; using the statistics with the code to estimate any or all of: a channel quality indicator, inter-cell power that hits a channel, a co-variance matrix of the inter - cell-interference that hits the channel, a full probability distribution of the Inter-cell interference; and sending the signal. There can be the step of randomizing the silent RE grid in consecutive, in frequency and time, resource blocks (RBs).There can be the step of , deriving the silent RE grid with essentially no signaling, overhead.

There can be the step of introducing another silent RE grid on a control channel to estimate the interference that hits; the control channel using code in an electronic memory 16. There can be the step of coordinating each silent grid of neighboring cells in said wireless system :such that there is no significant overlap. For each subframe, there can. be the step of grouping resource blocks into resource windows where each resource window is a group of contiguous, in frequency, resource blocks; and the number of resource blocks in each resource window may be configured semi-statically. Each resource window has a same number of silent REs, and are configured semi-statically.

In more, detail, the invention contains the. following general steps; and example realizations. In the following we focus on. the data channel, but the same approach, with straightforward modifications, can be applied to estimate the interference that hit the control channel.

### Designing the silent grids

Several aspects should be kept in mind when designing the silent grid

The interference on the silent, grid should reflect the interference statistics of the data channel as a whole. Therefore distribution of silent REs over the data channel should preferably be as uniform as possible.

According to one embodiment the grid could be pseudo-random in the sense that it should change over time and/or frequency to avoid significant long-term overlap with silent grids of neighbouring cells.

It should be noted that the invention is not limited to pseudo-random grids; for example, an alternative method is to coordinate the silent, grid of neighbouring cells such that no significant overlap occur and then signal the selected silent. RE grid to the UEs dynamically or semi-statically. Such an approach could however pbssibly require careful planning.

According to further embodiment the UEs should be able to readily, derive which silent grid is being used, with little or preferably no control signalling overhead.

Alternatively it is conceivable to use explicit signalling of the silent grid layout..

Accordingto a further embodiment clustering of the silent REs in one or a few RBs should be avoided for improved sample statistics.

A simple scheme; according to one embodiment, that achieves some or all of the criteria mentioned above is as follows:
- For each subframe, the RBs are grouped into resource windows (RW);
- Each RW is a group of contiguous (in frequency) RBs;.
- The number of RBs in each RW is configured semi-statically;
- As special cases, there could be only one RW that represent the entire system bandwidth, or there could be a RW for each RB.
- For each RW, all REs that are not control or RS signalling are enumerated;
- In each RW, a specified number of silent REs are selected from the set. of enumerated REs using a pseudo-random number generator that generates numbers, uniformly in the range of the enumerated data REs: Alternatively, selection of the silent RE are coordinated. The grouping into RWs, will ensure that clustering of silent REs is sufficiently limited. The number of selected silent REs could be fixed, derived from the number of RBs in each RW, or possible semi-statically configured.

The scheme can also readily be generalized to let a RW constitute only a part of a RB in the time domain; for example, the OFDM symbols in the RB, can be grouped so that symbols including RS symbols, and data symbols, are mapped to **RW_RS** and OFDM symbols carrying only data, are mapped to **RW_d.** It is also conceivable to use a different number of silent REs in **RW_RS** and **RW_d.** Such a separation of the OFDM symbols can be useful since the inter-cell interference that hit **RW_RS** and **RW_d** will have different statistics.

According to a further embodiment the power that is saved by remaining silent on some REs can be redistributed to boost the power.on other REs that carry data or reference symbols. Such power reallocation combined by the preceding method of assigning different OFDM symbols to different::RW categories, can be a useful approach,to reallocated the power within OFDM symbols, for example in order to support different powers on the RE carrying RS and the REs carrying data in the same OFDM symbol.

### Determining and configuring the silent RE grid

As indicated in the preceding, it is beneficial to let the silent RE grid be generated pseudo-randomly to transparently avoid consistent grid-overlap with neighbouring cells. It is therefore necessary to synchronize the random generators used at the NodeB with those in the UEs.

According to a further, embodiment of the present, invention a simple scheme for synchronizing the pseudo-random generators .is to reinitialize the pseudo-random generators in each frame using a seed that is derived from
1. Cell ID, to provide uniqueness for each cell.
2. Frame index, to provide hopping over time.

Both the cell ID and the frame index are available at the UEs. Note that any re-initialization,interval of the number generator can be used, as long as there is a suitable index, available at the UE, that can be used to progress the seed over time; this includes, but is not limited to, a subframe, or groups of frames.

If more flexibility is desired, such as configurable silent RE grid densities, some grid parameters could be set semi-statically using higher layer control signalling.

### Measuring the Interference

The silent RE grid is used by the UEs to collect statistics of the inter-cell interference that hit the data channel. If the silent grid is uniformly distributed over the data channel, as suggested in the preceding, the interference samples collected in the silent grid will, over time, be the same as the interference that hit the data channel as a whole. These samples can thus be utilized by the UE to estimate
- The inter-cell interference power that hits the data channel.
- The co-variance matrix of the inter-cell interference that hits the data channel. This is particularly useful if the UE has multiple antennas
- The full probability distribution of the inter-cell interference.
- The measured statistics can be average over time and frequency, similar to the approach proposed in *R1-074855, CQI Measurement Methodology, Ericsson, 3GPP RAN1#51, Korea.*

According to one embodiment the interference measurement on the silent RE grid can, for example, be used as a basis for the CQI reporting if it is combined with measurements of the received power of the data signals. Such a signal power estimate can, for instance, be obtained from measurements on the RS, taking potential signalling-power normalizations effects into account.

Exemplary improvements of different aspects and embodiments of the present invention is Improved capacity, coverage and quality, enabled through more accurate link adaptation, power control and scheduling, in turn enabled by more accurate interference estimation.

Moreover, the invention allows for inter-cell interference measurements directly on the data channel with small computational-complexity. The scheme also transparently manages inter-cell interference measurements in multiuser-MIMO allocation scenarios.

## Claims

1. A method in a receiving unit of a wireless network, for facilitating noise and interference measurements on an air interface, said method comprising steps of:
obtaining information relating to a time-varying layout of a silent resource element, RE, grid;
taking a presence of a silent RE grid into account in the reception of a control or a data channel;
collecting statistics relating to inter-cell interference based on measurements on said silent RE grid in an electronic memory having code; and
using said statistics with the code to estimate any or all of: a channel quality indicator, an inter-cell power that hits a channel, a co-variance matrix of an inter - cell interference that hits the channel and a full probability distribution of the inter-cell interference,
wherein said step of obtaining information comprises the steps of:
using a pseudo-random sequence to generate said layout of said silent RE grid; and
synchronizing said pseudo - random sequence by deriving a seed for said pseudo - random sequence from parameters,
wherein said pseudo - random sequence is synchronized in each frame based on said parameters that include a cell ID and a frame index.

2. The method according to claim 1, further comprising a step of introducing another silent RE grid on a control channel to estimate the interference that hits the control channel using code in an electronic memory.

3. A method in a transmitting unit of a wireless network, for facilitating noise and interference measurements on an air interface, said method comprising teps of:
obtaining information relating to a time-varying layout of a silent resource element, RE, grid;
taking a presence of a silent RE grid into account in the transmission of a control or a data channel;
collecting statistics relating to inter-cell interference based on measurements on said silent RE grid in an electronic memory having code; and
using said statistics with the code to estimate any or all of: a channel quality indicator, an inter-cell power that hits a channel, a co-variance matrix of an inter - cell interference that hits the channel and a full probability distribution of the inter-cell interference,
wherein said step of obtaining information comprises the steps of:
using a pseudo-random sequence to generate said layout of said silent RE grid; and
synchronizing said pseudo - random sequence by deriving a seed for said pseudo - random sequence from parameters,
wherein said pseudo - random sequence is synchronized in each frame based on said parameters that include a cell ID and a frame index.

4. A receiving unit (100) of a wireless network, for facilitating noise and interference measurements on an air interface comprising:
a network interface (12) arranged to obtain information relating to a time-varying layout of a silent resource element ,RE, grid;
an electronic memory (16) having code in communication with the network interface (12) arranged to store the information and collect statistics relating to inter-cell interference based on measurements on the silent RE grid; and
a processing unit (14) in communication with the electronic memory (16) arranged to take a presence of a silent RE grid into account in the reception of a control or a data channel, use the statistics with the code to estimate any or all of: a channel quality indicator, an inter-cell power that hits a channel, a co-variance matrix of an inter - cell interference that hits the channel and a full probability distribution of the inter-cell interference and send the signal through the network interface (12),
wherein said receiving unit (100) is arranged to use a pseudo-random sequence to generate said layout of said silent RE grid, and synchronize said pseudo - random sequence by deriving a seed for said pseudo - random sequence from parameters,
wherein the pseudo - random sequence is synchronized in each frame by the processing unit (14) based on parameters that include a cell ID and a frame index, and the layout of the silent RE grid is received through signalling by the network interface (12).

5. The receiving unit (100) as described in claim 4 wherein the processing unit (14) is further arranged to introduce another silent RE grid on a control channel to estimate the interference that hits the control channel using the code in the electronic memory (16).

6. A transmitting unit (110) of a wireless network, for facilitating noise and interference measurements on an air interface comprising:
a network interface (12) arranged to obtain information relating to a time-varying layout of a silent resource element, RE, grid;
an electronic memory (16) having code in communication with the network interface (12) arranged to store the information and collect statistics relating to inter-cell interference based on measurements on the silent RE grid; and
a processing unit (14) in communication with the electronic memory (16) arranged to take a presence of a silent RE grid into account in the transmission of a control or a data channel, use the statistics with the code to estimate any or all of: a channel quality indicator, an inter-cell power that hits a channel, a co-variance matrix of an inter - cell interference that hits the channel and a full probability distribution of the inter-cell interference and send the signal through the network interface (12),
wherein said transmitting unit (110) is arranged to use a pseudo-random sequence to generate said layout of said silent RE grid, and synchronize said pseudo - random sequence by deriving a seed for said pseudo - random sequence from parameters,
wherein the pseudo - random sequence is synchronized in each frame by the processing unit (14) based on parameters that include a cell ID and a frame index, and the layout of the silent RE grid is received through signalling by the network interface (12).

## Patentansprüche

1. Verfahren in einer Empfangseinheit eines drahtlosen Netzwerks zur Ermöglichung von Rausch- und Störungsmessung an einer Luftschnittstelle, wobei das Verfahren die folgenden Schritte umfasst:
Abrufen von Informationen in Bezug auf ein zeitveränderliches Layout eines stillen Ressourcenelement, RE,-Gitters;
Berücksichtigen eines Vorhandenseins eines stillen RE-Gitters beim Empfangen eines Steuer- oder eines Datenkanals;
Sammeln von Statistiken in Bezug auf interzellulare Störung basierend auf Messungen auf dem stillen RE-Gitter in einem elektronischen Speicher mit Code; und
Verwenden der Statistiken mit dem Code zum Schätzen eines oder aller von: einem Kanalqualitätsindikator, einer interzellularen Leistung, die einen Kanal stört, einer Kovarianzmatrix einer interzellularen Störung, die den Kanal stört, und einer volle Wahrscheinlichkeitsverteilung der interzellularen Störung,
wobei der Schritt des Abrufens von Informationen die folgenden Schritte umfasst:
Verwenden einer Pseudozufallsfolge zum Erzeugen des Layouts des stillen RE-Gitters; und
Synchronisieren der Pseudozufallsfolge durch Ableiten eines Anfangswerts für die Pseudozufallsfolge aus Parametern,
wobei die Pseudozufallsfolge in jedem Rahmen basierend auf den Parametern, die eine Zell-ID und einen Rahmenindex umfassen, synchronisiert wird.

2. Verfahren nach Anspruch 1, ferner umfassend einen Schritt des Einführens eines anderen stillen RE-Gitters auf einem Steuerkanal zum Schätzen der den Steuerkanal störenden Störung unter Verwendung von Code in einem elektronischen Speicher.

3. Verfahren in einer Sendeeinheit eines drahtlosen Netzwerks zur Ermöglichung von Rausch- und Störungsmessung an einer Luftschnittstelle, wobei das Verfahren die folgenden Schritte umfasst:
Abrufen von Informationen in Bezug auf ein zeitveränderliches Layout eines stillen Ressourcenelement, RE,-Gitters;
Berücksichtigen eines Vorhandenseins eines stillen RE-Gitters beim Senden eines Steuer- oder eines Datenkanals;
Sammeln von Statistiken in Bezug auf interzellulare Störung basierend auf Messungen auf dem stillen RE-Gitter in einem elektronischen Speicher mit Code; und
Verwenden der Statistiken mit dem Code zum Schätzen eines oder aller von: einem Kanalqualitätsindikator, einer interzellularen Leistung, die einen Kanal stört, einer Kovarianzmatrix einer interzellularen Störung, die den Kanal stört, und einer vollen Wahrscheinlichkeitsverteilung der interzellularen Störung,
wobei der Schritt des Abrufens von Informationen die folgenden Schritte umfasst:
Verwenden einer Pseudozufallsfolge zum Erzeugen des Layouts des stillen RE-Gitters; und
Synchronisieren der Pseudozufallsfolge durch Ableiten eines Anfangswerts für die Pseudozufallsfolge aus Parametern,
wobei die Pseudozufallsfolge in jedem Rahmen basierend auf den Parametern, die eine Zell-ID und einen Rahmenindex umfassen, synchronisiert wird.

4. Empfangseinheit (100) eines drahtlosen Netzwerks zum Ermöglichen von Rausch- und Störungsmessung an einer Luftschnittstelle, umfassend:
eine Netzwerkschnittstelle (12), die zum Abrufen von Informationen in Bezug auf ein zeitveränderliches Layout eines stillen Ressourcenelement, RE,-Gitters ausgelegt ist;
einen elektronischen Speicher (16) mit Code in Kommunikation mit der Netzwerkschnittstelle (12), der zum Speichern von Informationen und Sammeln von Statistiken in Bezug auf interzellulare Störung basierend auf Messungen auf dem stillen RE-Gitter ausgelegt ist; und
eine Verarbeitungseinheit (14) in Kommunikation mit dem elektronischen Speicher (16), die so ausgelegt ist, dass sie ein Vorhandensein eines stillen RE-Gitters beim Empfangen eines Steuer- oder eines Datenkanals berücksichtigt, die Statistiken mit dem Code zum Schätzen eines oder aller von einem Kanalqualitätsindikator, einer interzellularen Leistung, die einen Kanal stört, einer Kovarianzmatrix einer interzellularen Störung, die den Kanal stört, und einer vollen Wahrscheinlichkeitsverteilung der interzellularen Störung verwendet und das Signal durch die Netzwerkschnittstelle (12) sendet,
wobei die Empfangseinheit (100) so ausgelegt ist, dass sie eine Pseudozufallsfolge zum Erzeugen des Layouts des stillen RE-Gitters verwendet und die Pseudozufallsfolge durch Ableiten eines Anfangswerts für die Pseudozufallsfolge aus Parametern synchronisiert,
wobei die Pseudozufallsfolge in jedem Rahmen durch die Verarbeitungseinheit (14) basierend auf Parametern, die eine Zell-ID und einen Rahmenindex umfassen, synchronisiert wird, und das Layout des stillen RE-Gitters durch Signalisieren durch die Netzwerkschnittstelle (12) empfangen wird.

5. Empfangseinheit (100) nach Anspruch 4, wobei die Verarbeitungseinheit (14) ferner so ausgelegt ist, dass sie ein anderes stilles RE-Gitter auf einem Steuerkanal zum Schätzen der den Steuerkanal störenden Störung unter Verwendung des Codes im elektronischen Speicher (16) einführt.

6. Sendeeinheit (110) eines drahtlosen Netzwerks zum Ermöglichen von Rausch- und Störungsmessung an einer Luftschnittstelle, umfassend:
eine Netzwerkschnittstelle (12), die zum Abrufen von Informationen in Bezug auf ein zeitveränderliches Layout eines stillen Ressourcenelement, RE,-Gitters ausgelegt ist;
einen elektronischen Speicher (16) mit Code in Kommunikation mit der Netzwerkschnittstelle (12), der zum Speichern von Informationen und Sammeln von Statistiken in Bezug auf interzellulare Störung basierend auf Messungen auf dem stillen RE-Gitter ausgelegt ist; und
eine Verarbeitungseinheit (14) in Kommunikation mit dem elektronischen Speicher (16), die so ausgelegt ist, dass sie ein Vorhandensein eines stillen RE-Gitters beim Senden eines Steuer- oder eines Datenkanals berücksichtigt, die Statistiken mit dem Code zum Schätzen eines oder aller von einem Kanalqualitätsindikator, einer interzellularen Leistung, die einen Kanal stört, einer Kovarianzmatrix einer interzellularen Störung, die den Kanal stört, und einer vollen Wahrscheinlichkeitsverteilung der interzellularen Störung verwendet und das Signal durch die Netzwerkschnittstelle (12) sendet,
wobei die Sendeeinheit (110) so ausgelegt ist, dass sie eine Pseudozufallsfolge zum Erzeugen des Layouts des stillen RE-Gitters verwendet und die Pseudozufallsfolge durch Ableiten eines Anfangswerts für die Pseudozufallsfolge aus Parametern synchronisiert,
wobei die Pseudozufallsfolge in jedem Rahmen durch die Verarbeitungseinheit (14) basierend auf Parametern, die eine Zell-ID und einen Rahmenindex umfassen, synchronisiert wird, und das Layout des stillen RE-Gitters durch Signalisieren durch die Netzwerkschnittstelle (12) empfangen wird.

## Revendications

1. Procédé, dans une unité de réception d'un réseau sans fil, destiné à faciliter des mesures de bruit et d'interférence sur une interface hertzienne, ledit procédé comprenant les étapes de :
l'obtention d'informations relatives à une disposition variable dans le temps d'une grille d'éléments de ressources, RE, silencieuse ;
la prise en compte d'une présence d'une grille RE silencieuse dans la réception d'un canal de commande ou d'un canal de données ;
le recueil de statistiques relatives à une interférence intercellulaire sur la base de mesures sur ladite grille RE silencieuse dans une mémoire électronique comportant un code ; et
l'utilisation desdites statistiques avec le code pour estimer l'un quelconque ou l'intégralité de : un indicateur de qualité de canal, une puissance intercellulaire qui atteint un canal, une matrice de covariance d'une interférence intercellulaire qui atteint le canal et une distribution de probabilité complète de l'interférence intercellulaire,
dans lequel ladite étape de l'obtention d'informations comprend les étapes de :
l'utilisation d'une séquence pseudo-aléatoire pour générer ladite disposition de ladite grille RE silencieuse ; et
la synchronisation de ladite séquence pseudo-aléatoire par la dérivation d'un germe pour ladite séquence pseudo-aléatoire à partir de paramètres,
dans lequel ladite séquence pseudo-aléatoire est synchronisée dans chaque trame sur la base desdits paramètres comprenant un ID de cellule et un indice de trame.

2. Procédé selon la revendication 1, comprenant en outre une étape de l'introduction d'une autre grille RE silencieuse sur un canal de commande pour estimer l'interférence qui atteint le canal de commande en utilisant un code dans une mémoire électronique.

3. Procédé, dans une unité de transmission d'un réseau sans fil, destiné à faciliter des mesures de bruit et d'interférence sur une interface hertzienne, ledit procédé comprenant les étapes de :
l'obtention d'informations relatives à une disposition variable dans le temps d'une grille d'éléments de ressources, RE, silencieuse ;
la prise en compte d'une présence d'une grille RE silencieuse dans la transmission d'un canal de commande ou d'un canal de données ;
le recueil de statistiques relatives à une interférence intercellulaire sur la base de mesures sur ladite grille RE silencieuse dans une mémoire électronique comportant un code ; et
l'utilisation desdites statistiques avec le code pour estimer l'un quelconque ou l'intégralité de : un indicateur de qualité de canal, une puissance intercellulaire qui atteint un canal, une matrice de covariance d'une interférence intercellulaire qui atteint le canal et une distribution de probabilité complète de l'interférence intercellulaire,
dans lequel ladite étape de l'obtention d'informations comprend les étapes de :
l'utilisation d'une séquence pseudo-aléatoire pour générer ladite disposition de ladite grille RE silencieuse ; et
la synchronisation de ladite séquence pseudo-aléatoire par la dérivation d'un germe pour ladite séquence pseudo-aléatoire à partir de paramètres,
dans lequel ladite séquence pseudo-aléatoire est synchronisée dans chaque trame sur la base desdits paramètres comprenant un ID de cellule et un indice de trame.

4. Unité de réception (100) d'un réseau sans fil, destinée à faciliter des mesures de bruit et d'interférence sur une interface hertzienne, comprenant :
une interface de réseau (12) agencée pour effectuer l'obtention d'informations relatives à une disposition variable dans le temps d'une grille d'éléments de ressources, RE, silencieuse ;
une mémoire électronique (16) comportant un code en communication avec l'interface de réseau (12) agencée pour effectuer la mémorisation des informations et le recueil de statistiques relatives à une interférence intercellulaire sur la base de mesures sur ladite grille RE silencieuse ; et
une unité de traitement (14) en communication avec la mémoire électronique (16) agencée pour effectuer la prise en compte d'une présence d'une grille RE silencieuse dans la réception d'un canal de commande ou d'un canal de données, l'utilisation des statistiques avec le code pour estimer l'un quelconque ou l'intégralité de : un indicateur de qualité de canal, une puissance intercellulaire qui atteint un canal, une matrice de covariance d'une interférence intercellulaire qui atteint le canal et une distribution de probabilité complète de l'interférence intercellulaire, et l'envoi du signal par l'intermédiaire de l'interface de réseau (12),
dans laquelle ladite unité de réception (100) est agencée pour effectuer l'utilisation d'une séquence pseudo-aléatoire pour générer ladite disposition de ladite grille RE silencieuse, et la synchronisation de ladite séquence pseudo-aléatoire par la dérivation d'un germe pour ladite séquence pseudo-aléatoire à partir de paramètres,
dans laquelle la séquence pseudo-aléatoire est synchronisée dans chaque trame par l'unité de traitement (14) sur la base de paramètres comprenant un ID de cellule et un indice de trame, et la disposition de la grille RE silencieuse est reçue par l'intermédiaire d'une signalisation par l'interface de réseau (12).

5. Unité de réception (100) selon la revendication 4, dans laquelle l'unité de traitement (14) est en outre agencée pour effectuer l'introduction d'une autre grille RE silencieuse sur un canal de commande pour estimer l'interférence qui atteint le canal de commande en utilisant le code dans la mémoire électronique (16).

6. Unité de transmission (110) d'un réseau sans fil, destinée à faciliter des mesures de bruit et d'interférence sur une interface hertzienne, comprenant :
une interface de réseau (12) agencée pour effectuer l'obtention d'informations relatives à une disposition variable dans le temps d'une grille d'éléments de ressources, RE, silencieuse ;
une mémoire électronique (16) comportant un code en communication avec l'interface de réseau (12) agencée pour effectuer la mémorisation des informations et le recueil de statistiques relatives à une interférence intercellulaire sur la base de mesures sur ladite grille RE silencieuse ; et
une unité de traitement (14) en communication avec la mémoire électronique (16) agencée pour effectuer la prise en compte d'une présence d'une grille RE silencieuse dans la transmission d'un canal de commande ou d'un canal de données, l'utilisation des statistiques avec le code pour estimer l'un quelconque ou l'intégralité de : un indicateur de qualité de canal, une puissance intercellulaire qui atteint un canal, une matrice de covariance d'une interférence intercellulaire qui atteint le canal et une distribution de probabilité complète de l'interférence intercellulaire, et l'envoi du signal par l'intermédiaire de l'interface de réseau (12),
dans laquelle ladite unité de transmission (110) est agencée pour effectuer l'utilisation d'une séquence pseudo-aléatoire pour générer ladite disposition de ladite grille RE silencieuse, et la synchronisation de ladite séquence pseudo-aléatoire par la dérivation d'un germe pour ladite séquence pseudo-aléatoire à partir de paramètres,
dans laquelle la séquence pseudo-aléatoire est synchronisée dans chaque trame par l'unité de traitement (14) sur la base de paramètres comprenant un ID de cellule et un indice de trame, et la disposition de la grille RE silencieuse est reçue par l'intermédiaire d'une signalisation par l'interface de réseau (12).
